# EUROPÄISCHE PATENTSCHRIFT

(11) **EP 2 672 100 B1**
(45) Veröffentlichungstag und Bekanntmachung des Hinweises auf die Patenterteilung: **04.12.2019**
(21) Anmeldenummer: 13002483.9
(22) Anmeldetag: 10.05.2013
(51) Int. Cl.: F02M 31/13, H05B 1/02, B60H 1/20

(54) **Steuerung eines elektrischen Ansaugluftwärmers einer Brennkraftmaschine**
Control of an electric intake air heater of an internal combustion engine
Commande d'un réchauffeur électrique d'air d'admission d'un moteur à combustion interne

(30) Priorität: 06.06.2012 DE 102012011252
(43) Veröffentlichungstag der Anmeldung: 11.12.2013
(73) Patentinhaber: MAN Truck & Bus SE, 80995 München (DE)
(72) Erfinder: Bachmann, Johannes, 90547 Stein (DE)
(74) Vertreter: Liebl, Thomas

(56) Entgegenhaltungen:
- EP-A2- 1 385 073
- WO-A2-02/45985
- CN-A- 102 345 495
- DE-A1-102010 042 013

## Beschreibung

Die Erfindung betrifft eine Steuerung eines elektrischen Ansaugluftvorwärmers nach dem Oberbegriff des Anspruchs 1.

Um bei einer kalten Brennkraftmaschine, insbesondere bei einer DieselBrennkraftmaschine einen Start zu ermöglichen und/oder das Startverhalten zu verbessern, ist eine "Motorvorwärmung" allgemein bekannt, wobei insbesondere die angesaugte Luft vorgewärmt wird. Dazu ist es allgemein bekannt, einen elektrischen, von einem Steuergerät angesteuerten Ansaugluftvorwärmer mit Heizlamellen im Ansaugkanal der Brennkraftmaschine anzuordnen. Das Steuergerät wird dazu vom Fahrer üblicherweise durch eine Drehung des Zündschlüssels in die Stellung "1" am Zündschloss aktiviert, wodurch für eine bestimmte Heizzeit - abhängig von einer zum Beispiel im Kühlwasser gemessenen Temperatur - der Heizvorgang gestartet und zudem eine Signallampe als "Vorglühleuchte" eingeschaltet wird. Nach der vorgegebenen Heizzeit und Erlöschen der "Vorglühleuchte" wird die Brennkraftmaschine selbsttätig von einer Startautomatik oder vom Fahrer durch Drehen des Zündschlüssels in die Stellung "2" gestartet. Ein Beispiel einer solchen Vorrichtung ist in der CN 102345495 A gezeigt.

Bei der vorstehenden Steuerung eines elektrischen Luftansaugvorwärmers besteht die Gefahr, dass durch unmittelbar aufeinander folgende Heizvorgänge, beispielsweise durch eine spielerische oder missbräuchliche aufeinanderfolgende Betätigung des Zündschlüssels in die Stellungen "0" und "1", die im Ansaugluftvorwärmer bzw. den dortigen Heizlamellen gespeicherte Wärmeenergie jeweils aufsummiert wird und bis zu einer unzulässig hohen Wärmenergie entsprechend einer unzulässig hohen Temperatur ansteigt. Eine solche Überhitzung kann zu thermischen Schäden bis zum Schmelzen und Ablösen von Teilen der Heizlamellen führen, welche dann mit der Ansaugluft in die Brennkraftmaschine gelangen und dort zu einem Totalschaden führen können.

Eine solche Überhitzung am Ansaugluftvorwärmer ist mit am Motorblock angebrachten Temperatursensoren nicht eindeutig erkennbar, da unzulässig hohe Temperaturen an den Heizlamellen des Ansaugluftvorwärmers durch die Entfernung des Temperatursensors und die große Masse des Motorblocks wenn überhaupt dann zu spät ermittelt werden können. Somit wurde bisher die vorstehende Gefahr durch Missbrauch mit einer Überhitzung des Ansaugluftvorwärmers akzeptiert oder aber durch eine vergleichsweise aufwändige robuste Konstruktion der Brennkraftmaschine und/oder der Heizelemente neutralisiert.

Aufgabe der Erfindung ist es, eine Steuerung eines elektrischen Ansaugluftvorwärmers an einer Brennkraftmaschine so weiterzubilden, dass die Gefahr einer Überhitzung durch einen wiederholten Start eines Heizvorgangs ausgeschlossen wird.

Diese Aufgabe wird gelöst mit den Merkmalen des Patentanspruchs 1. Vorteilhafte Ausgestaltungen sind Gegenstand der Unteransprüche.

Erfindungsgemäß ist vorgesehen, dass die Wärmeenergie am Ansaugluftvorwärmer für Maßnahmen gegen eine Überhitzung bilanziert wird, dergestalt, dass die Heizenergie indirekt durch eine Messung der Heizzeit erfasst wird, wobei der gemessenen Heizzeit eine Heiztemperatur entspricht und die Zuordnung gemessene Heizzeit zu Heizenergie und zu Heiztemperatur entsprechend einer ermittelten Heiz-Kennkurve oder einem Heiz-Kennfeld erfolgt. Im einfachsten Fall kann hier für eine grobe Abschätzung eine lineare Zuordnung vorgesehen werden. Bei einer experimentell ermittelten Heiz-Kennkurve oder einem Heiz-Kennfeld ist eine relativ genaue Zuordnung zwischen der gemessenen Heizzeit und einer Heiztemperatur an kritischen Heizelementen des Ansaugluftvorwärmers möglich.

Anschließend an die Heizzeit nach Beendigung des Heizvorgangs wird die Abkühlzeit erfasst, wobei auch der Abkühlzeit eine Kühlenergie und damit eine Kühltemperatur entsprechend einer Kühl-Kennkurve oder einem Kühl-Kennfeld zugeordnet wird. Diese Kühlenergie, bzw. Kühltemperatur wird dann von der Heizenergie, bzw. der Heiztemperatur abgezogen, wobei als Ergebnis dieser Bilanzierung die verbleibende Differenz entsprechend einer Restheizenergie bzw. einer aktuellen Temperatur als Kriterium verwendet wird, ob nach der Abkühlzeit sofort ein erneuter Heizvorgang ohne Überhitzung zulässig ist, das heißt durch einen erneuten sofortigen Heizvorgang noch keine Überhitzung auftritt. Falls die bilanzierte Restheizenergie, bzw. aktuelle Temperatur dagegen zu hoch ist, wird eine weitere Abkühlzeit als Vorschaltzeit für eine weitere Abkühlung auf einen unkritischen Wert für einen Heizstart ermittelt. Erst nach Abwarten dieser Vorschaltzeit wird ein neuer Heizperiodenstart freigegeben. Die Bilanzierung, die Ermittlung der Vorschaltzeit sowie eine Freigabe eines Heizstarts kann von einem Steuergerät durchgeführt werden.

Die vorstehende Maßnahme unterbindet sicher eine Überhitzung einer elektrischen Motorvorwärmung (bei versehentlicher oder spielerischer) wiederholter Zündung AN-AUS, wenn jedes Mal ein Steuergerät zurückgesetzt und anschließend ein neuer Heizzyklus gestartet wird, da bei der Gefahr einer Überhitzung eine ermittelte Vorschaltzeit als weitere Abkühlzeit einzuhalten ist. Die dazu erforderlichen Zeitmessungen und Bilanzierungen sind zum Beispiel einfache elektrische/elektronische Operationen für die die "Hardware" regelmäßig im Fahrzeug vorhanden ist, so dass dann in diesem Fall ausser einer entsprechenden Auslegung und Programmierung der Steuerung praktisch keine Zusatzkosten anfallen.

Bei einer weiter konkretisierten Steuerung wird durch einen manuell eingeschalteten Zündschalter (Stellung "1") ein Einschaltmodus eines Steuergeräts aktiviert, womit die Heizfunktion des Ansaugluftvorwärmers (und gegebenenfalls weiterer Vorwärmeinrichtungen) für wenigstens einen Heizzyklus mit einer bestimmten Heizzeit eingeschaltet wird. Nach Ablauf der Heizzeit oder Ausschalten des Zündschalters (Stellung "0") wird die Heizfunktion für den Ansaugluftvorwärmer vom Steuergerät abgeschaltet. Nach einer Nachlaufzeit des Steuergeräts wird der Einschaltmodus zurückgesetzt und deaktiviert, wobei im normalen Betrieb nach der Heizzeit innerhalb der Nachlaufzeit ein Start der Brennkraftmaschine erfolgt.

Die Heizzeit wird von einem Zeitzähler im Steuergerät vorgegeben und erfasst, der mit der Aktivierung des Einschaltmodus gestartet wird. Der Heizzeit wird eine an die Heizelemente des Ansaugluftvorwärmers abgegebene elektrische Heizenergie zugeordnet und dieser jeweils aufsummierten Heizenergie wird wiederum jeweils eine Heiztemperatur zugeordnet. Durch diese Zuordnung ergibt sich eine aktuelle Heiztemperatur beim Ablauf der Heizzeit an den Heizelementen, die zwar nicht unmittelbar durch einen Temperatursensor gemessen ist, jedoch durch die Zeitmessung zur Abschätzung kritischer Überhitzungen ausreichend genau erfassbar ist.

Der Zeitzähler erfasst dann anschließend an die Heizzeit eine Abkühlzeit nach Abschaltung des Zündschalters einschließlich einer Nachlaufzeit des Steuergeräts. Dieser Abkühlzeit wird eine von den Heizelementen abgegebene Kühlenergie zugeordnet und diese von der vorher ermittelten Heizenergie im Steuergerät subtrahiert, wodurch eine Restheizenergie entsprechend einer aktuellen Abkühltemperatur beim Ablauf der Abkühlzeit indirekt ermittelt wird.

Der Abkühlwert entsprechend dieser Abkühltemperatur wird dann in einem nichtflüchtigen Speicher beim Ablauf der Nachlaufzeit gespeichert (wenn nicht in der Nachlaufzeit bereits die Brennkraftmaschine gestartet wurde) und der Zeitzähler wird für einen neuen Start zurückgesetzt.

Bei einem erneuten Einschalten des Zündschalters und damit einer Aktivierung des Steuergeräts, "weiß" dieses nicht, ob eine lange Zwischenzeit oder möglicherweise nur eine kritische kurze Zwischenzeit abgelaufen ist, innerhalb der praktisch keine oder nur eine unzureichende Abkühlung für einen problemlosen Heizstart erfolgt ist. Daher wird vor einer erneuten Aktivierung des Steuergeräts der beim Ablauf der vorherigen Nachlaufzeit gespeicherte Abkühlwert ausgelesen und als Start für eine vom Zeitgeber vorgegebene Vorschaltzeit als fiktive Abkühlzeit verwendet, die sich aus dem gespeicherten Abkühlwert bis zum Erreichen einer für den Ansaugluftvorwärmer unkritischen Starttemperatur ergibt. Mit anderen Worten wird somit in jedem Fall die Steuerung so durchgeführt, wie wenn nach Beendigung des vorhergehenden Heizvorgangs nach der Nachlaufzeit keine Abkühlzeit mehr zur Verfügung gestanden hätte und keine (unbekannte) Zwischenzeit verstrichen wäre. Nach Ablauf dieser Vorschaltzeit wird dann der Startmodus für einen Heizvorgang am Ansaugluftvorwärmer vom Steuergerät wieder aktiviert. Mit dieser Maßnahme ist in jedem Fall sichergestellt, dass eine Überhitzung nicht erfolgt unabhängig davon, wie lange die (für das Steuergerät unbekannte) Zwischenzeit zwischen Aufeinanderfolgenden AN- und AUS-Schaltungen der Zündung war.

Auch bei der vorstehenden konkretisierten Steuerung sind die Steuervorgänge im Wesentlichen Operationen, die mit einer ohnehin vorhandenen "Hardware" einfach durchführbar sind.

Ersichtlich kommt es bei der Abschätzung für eine Überhitzungsmöglichkeit nicht auf eine Präzisionsmessung der aktuellen Temperatur am Ansaugluftvorwärmer an. Um jedoch zu genaueren Ergebnissen zu kommen, kann bei der Zuordnung Heizzeit - Heizenergie - Heiztemperatur und/oder bei der Zuordnung Abkühlzeit - Kühlenergie - Kühltemperatur eine Anpassung und Berücksichtigung von Systemparametern erfolgen. Insbesondere können bei den Ermittlungen eine gemessene Umgebungstemperatur und/oder ein Ansaugluftmassenstrom miteinbezogen werden.

In einer weiteren Ausgestaltung kann für einen neuen Heizzyklus die Heizzeit unter Berücksichtigung einer ermittelten Heizrestenergie entsprechend verkürzt werden.

Je nach den Gegebenheiten kann auch mit einem Temperatursensor, insbesondere mit einem Motortemperatursensor, ein Temperatur-Schwellwert vorgegeben werden, über den ein "Warm-Start" der Brennkraftmaschine ohne Heizen des Ansaugluftvorwärmers und ohne Aktivierung einer Vorglühleuchte durchführbar ist. Unter diesem Temperatur-Schwellwert soll dagegen bei Einschaltung der Zündung der Heizzyklus für eine Heizung des Ansaugluftvorwärmers zusammen mit einer Aktivierung der Vorglühleuchte gestartet werden. Der Motorstart kann dann anschließend gegebenenfalls selbsttätig oder nach Erlöschen der Vorglühleuchte vom Fahrer erfolgen.

Vorteilhaft ist es, wenn die Vorglühleuchte bereits in der einem Heizzyklus vorgeschalteten Vorschaltzeit aktiviert wird, wobei, wie vorstehend ausgeführt, diese Vorschaltzeit einer gegebenenfalls fiktiven Abkühlzeit entspricht. Um einen Fahrer nicht zu verwirren, wird dann die Vorglühleuchte auch während dieser Vorschaltzeit eingeschaltet, so dass der Fahrer allenfalls eine Verlängerung der "Vorglühzeit" wahrnimmt.

In einer aufwändigeren redundanten Anordnung kann zusätzlich zu der Überwachung auf Überhitzung durch Bilanzierungen auch eine weitere Temperatur-Überwachung auf Überhitzung des Ansaugluftvorwärmers unmittelbar durch einen entsprechend positionierten Temperatursensor durchgeführt werden.

In einer weiteren Ausgestaltung werden Sensorwerte, welche sich typischerweise nur vergleichsweise langsam ändern, insbesondere ein Kühlwassertemperatur-Sensorwert ebenfalls erfasst und in einem nichtflüchtigen Speicher beim Ablauf der Nachlaufzeit abgelegt.

Bei einer Änderung eines oder mehrerer dieser Sensorwerte in signifikanter Größenordnung, zum Beispiel bei einem Absinken der Kühlwassertemperatur um mehr als 30°K, wird durch einen Algorithmus auf eine ausreichend lange Abkühlzeit (typischerweise länger als eine Stunde) geschlossen. Der gespeicherte Wärmewert wird zurückgesetzt und ein Heizvorgang ist sofort wieder aktivierbar. Auf diese Weise wird eine unnötige Verlängerung der Startzeit vermieden.

Der Kern der Erfindung der vorstehenden Steuerung eines elektrischen Ansaugluftvorwärmers einer Brennkraftmaschine besteht somit darin, dass mindestens ein elektrisches Heizelement für eine definierte Zeit - abhängig von Bauart, Versorgungsspannung und Temperatur - aktiviert wird, um die im Brennraum befindliche Luft und/oder bauliche Teile des Luftversorgungssystems bei Bedarf auf eine für den Betrieb der Maschine, insbesondere für den Start der Maschine erforderliche Temperatur aufzuheizen, wobei diese Bauteile die Wärme an die in die Maschine einströmende Luft abgeben. Typische elektrische Heizelemente haben die Eigenschaft die elektrische Energie zur Temperaturerhöhung bis hin zur eigenen Zerstörung umzusetzen. Darauf ergibt sich die Gefahr einer vorzeitigen Alterung oder in einem besonders kritischen Fall die Möglichkeit einer plötzlichen Zerstörung, insbesondere ein Schmelzen von Heizelementteilen, die nach der Zerstörung und nach einem Wiedererstarren als Metalltropfen mit der Ansaugluft in die Brennkraftmaschine gelangen können und dort schwere Schäden verursachen können. Eine solche Situation kann sich typischerweise dann ergeben, wenn die Vorheizelemente durch mehrere aufeinander folgende, abgebrochene Startprozeduren häufig in Folge aktiviert werden. Dabei wird über die Gesamtzeit ein höherer Wärmestrom in die betroffenen Bauteile eingebracht, als im selben Zeitraum durch Abkühleffekte abgeführt werden kann.

Um dies zu verhindern, wird erfindungsgemäß in einem elektronischen Steuergerät die in die erwärmten Bauteile eingebrachte Energiemenge bei einer Aktivierung in einem mathematischen Aufsummierer (Integrator) entsprechend einem Wärmemodell abhängig von der umgesetzten elektrischen Leistung bilanziert. Wenn ein Vorliegen einer kritischen Wärmemenge und damit einer kritischen Bauteiltemperatur erkannt wird, verhindert das Steuergerät die weitere Aktivierung der Heizelemente, um eine Beschädigung zu unterbinden. Bei einem folgenden Startversuch wird somit entweder die Aktivierungsdauer der Heizelemente entsprechend der bereits eingebrachten Wärmemenge reduziert oder vor der Aktivierung eine ausreichende Abkühlzeit abgewartet. Eine Verzögerung des Starts der Brennkraftmaschine wird in diesem Fall hingenommen. Einfache Maßnahmen unter Berücksichtigung von Schaltzeiten zur Vermeidung von Bauteilüberhitzungen bei Glühkerzen sind bereits aus US 6,164,258 und US 2006/0207541 A1 bekannt.

Für die Bilanzierung der Wärmemenge ist es erforderlich im erwähnten Wärmemodell auch die Abkühlung der Bauteile abzubilden. Da der physikalische Prozess des Abkühlens kontinuierlich ohne äußeren Antrieb stattfindet, muss er zur korrekten Berechnung des Wärmemodells entsprechend kontinuierlich auch bei stehendem Fahrzeug bzw. bei Außerbetrieb gesetzter Brennkraftmaschine berechnet werden. Ein Problem kann sich hier daraus ergeben, dass die Ansteuerung des Vorheizsystems im Steuergerät durchgeführt wird aber außerhalb des Betriebs der Brennkraftmaschine aus Gründen der Energieersparnis das Steuergerät für die Regelung der Brennkraftmaschine regelmäßig inaktiv ist. Bei einer solchen oft im Stand der Technik bestehenden Anordnung und Schaltung sind somit Berechnungen zum Abkühlvorgang nach Abschalten der Brennkraftmaschine ebenfalls unterbrochen. Im Weiteren werden wesentliche Eigenschaften insbesondere des Wärmemodells und Lösungen zum vorstehenden Problem angegeben:
Im Wärmemodell wird vorteilhaft die Kühlung durch den Ansaugluftmassenstrom drehzahlabhängig berücksichtigt, wobei der Integrator gemäß einer Kennlinie dQ/dt = F(Nₘₒₜ) dekrementiert wird. Daraus ergibt sich eine spürbar verkürzte Startverzögerung oder aber eine deutlich präziser an den thermischen Zustand angepasste Adaptierung des Vorheizvorgangs.

Andererseits soll die Inkrementierungsgeschwindigkeit des Integrators an die physikalische Leistung der Heizelemente angepasst werden, welche als leistungsvariable Ansteuerung abhängig von der Ansteuerung und/oder zur Verfügung stehenden Batteriespannung veränderlich sein kann.

Um den Zustand eines abgeschalteten Steuergeräts zu berücksichtigen, soll der nummerische Stand des im Wärmemodell verwendeten Integrators beim Abschalten des Steuergeräts in einem nichtflüchtigen Speicher als aktuelle Wärmemenge in einem Wärmekonto abgelegt werden. Bei einer erneuten Aktivierung des Steuergeräts wird dann der Integrator mit gespeichertem Wert initialisiert, so dass die vor der Abschaltung des Steuergeräts eingebrachte Wärmemenge im Wärmemodell berücksichtigt wird.

Zudem soll auch die aktuelle Zeit t (unabhängig von deren Format und Bezug) bei einem Stopp der Berechnung des Wärmemodells in einen nichtflüchtigen Speicher geschrieben werden und somit nach einer erneuten Aktivierung zur Verfügung stehen. Damit kann die bei einem inaktiven Steuergerät verstrichene Zeit als Abkühlzeit mit stehender Brennkraftmaschine im Wärmemodell berücksichtigt werden, entsprechend einer Berechnung der Abkühlzeit bei ausgeschaltetem Steuergerät.

Aus Energiespargründen ist es zweckmäßig, dass die Funktion des Wärmemodells mindestens auf zwei kooperierende Steuergeräte verteilt wird, von denen eines bei abgestellter Brennkraftmaschine in Betrieb ist und welches bei Bedarf den anderen Steuergeräten ein aktuelles Zeitsignal liefert. Das aktuelle Zeitsignal kann beispielsweise von einem elektronischen Tachograph abgeleitet werden.

Ein Problem kann eine fehlerhafte und andauernde Aktivierung des Vorheizsystems sein, beispielsweise durch einen verschweißten mechanischen Relaiskontakt eines Ansteuerrelais, wobei durch die fehlerhafte Aktivierung die Vorheizelemente mit der vorstehend genannten Gefahr einer Beschädigung der Brennkraftmaschine betätigt werden und schmelzen können. Für einen solchen Fall kann das vorliegende Wärmemodell genutzt werden durch Berechnung der Heizenergie festzustellen, ob die Vorheizelemente möglicherweise bereits geschmolzen sind und dann ein Start der Brennkraftmaschine als Motorschutz unterbunden oder erschwert wird. Zudem soll nach einer Aktivierung des Steuergeräts eine ausreichende Verzögerungszeit vorgehalten werden, um eine Zeitinformation aus einem Datenübertragungssystem mit begrenzter Kapazität empfangen zu können.

Ein Fehlerfall mit nicht vollziehbarer Heizdauer kann sich beispielsweise ergeben durch eine Nicht-Verfügbarkeit des Zeitsignals bei Eintreten und/oder Wegfall des Fehlers oder durch zu diesem Zeitpunkt inaktivem Steuergerät oder einen fehlerbedingten Signalausfall. In einem solchen oder ähnlichen Fehlerfall bei einer nicht nachvollziehbaren Heizdauer erfolgt eine Annahme über eine Heizzeit gemäß einer Werksvorgabe, die zu einer entsprechenden Fehlerreaktion führt.

Anhand einer Zeichnung wird ein Ausführungsbeispiel der Erfindung weiter erläutert.

Es zeigen:
- Fig. 1: eine schematische Draufsicht auf einen elektrischen Ansaugluftvorwärmer und die zugehörige Schaltungsanordnung,
- Fig. 2: ein Ablaufschema bei einem "Warm-Start",
- Fig. 3: ein Ablaufschema bei einem normalen "Kalt-Start",
- Fig. 4: eine schematische Darstellung einer fortlaufenden Wärmeenergieerhöhung bei wiederholter Zündung AN-AUS ohne die erfindungsgemäße Maßnahme,
- Fig. 5: ein Ablaufschema gemäß der Erfindung zur Vermeidung einer Überhitzung,
- Fig. 6: eine Darstellung der Wärmeströme,
- Fig. 7: ein Wärmemodell, und
- Fig. 8: einen Entscheidungsbaum für eine Fehlfunktion.

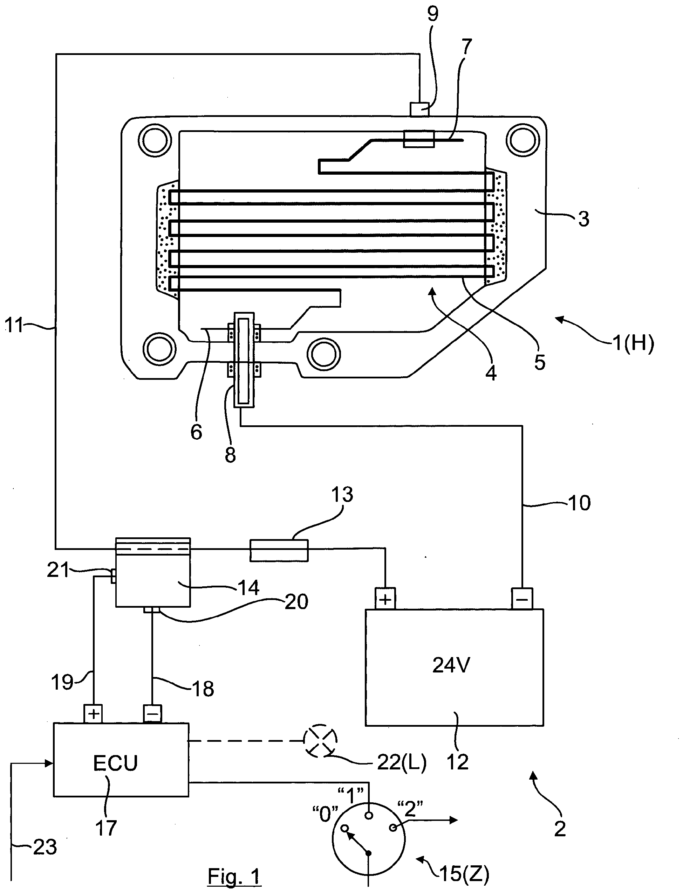

In Fig. 1 ist ein Ansaugluftvorwärmer 1 (H) mit der zugehörigen elektrischen Schaltungsanordnung 2 schematisch dargestellt.

Der Ansaugluftvorwärmer 1 liegt in einem (nicht gezeigten) Ansaugkanal einer Brennkraftmaschine eines Nutzfahrzeugs und besteht im Wesentlichen aus einem ringförmigen Gehäuseteil 3, welches quer im Ansaugkanal liegt und aus einem Widerstandselement als Heizelement 4.

Das Heizelement 4 besteht aus meanderförmigen Heizlamellen 5, die beabstandet in Schichten übereinanderliegen, jeweils seitlich elektrisch isoliert im Gehäuseteil 3 gehalten sind und mit ihren Lamellenenden 6 und 7 jeweils an zugeordneten elektrischen Anschlüssen 8, 9 isoliert am Gehäuseteil 3 angeschlossen sind.

Der Ansaugluftvorwärmer 1 bzw. das Heizelement 4 liegt im Lastkreis (Minus-Leitung 10 und Plus-Leitung 11) einer Batterie 12 im Bordnetz des Nutzfahrzeugs.

Nach der Batterie 12 ist in der Plusleitung 11 eine Schmelzsicherung 13 und nachfolgend ein (schematisch dargestelltes) Relais 14 angeordnet.

Ein mit einem Zündschlüssel betätigbares Zündschloss 15 (Z) weist die Stellungen "0", "1" und "2" auf. Die Stellung "1" des Zündschlosses 15 ist mit einer Leitung 16 mit einem Steuergerät 17 (ECU) verbunden. Das Steuergerät 17 ist zudem an einem Steuerkreis (Minus-Leitung 18 und Plus-Leitung 19) angeschlossen, in dem das Relais mit jeweils zugeordneten Steuerkontakten 20, 21 liegt.

Weiter ist am Steuergerät 17 eine Lampe 22 (L) als "Vorglühleuchte" angeschlossen. Das Steuergerät 17 erhält zudem über die Leitung 23 von einem (nicht dargestellten Temperatursensor) eine Information, ob ein "Warm-Start" oder ein "Kalt-Start" mit einer Aktivierung des Ansaugluftvorwärmers 1 erforderlich ist.

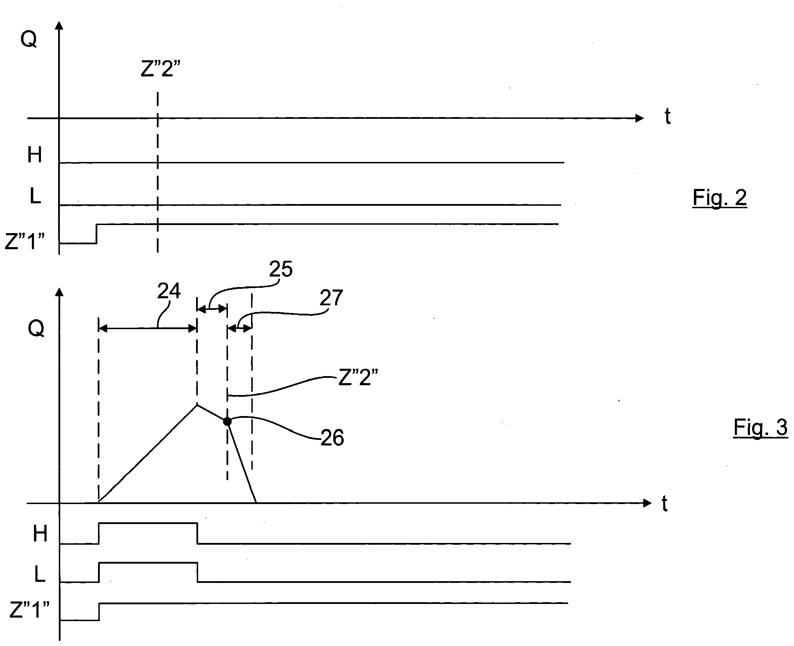

In Fig. 2 ist ein Ablaufschema für einen normalen "Warm-Start" der Brennkraftmaschine gezeigt: Nach Einschaltung der Zündung (Z "1") wird weder der Ansaugluftvorwärmer 1 (H) noch die Lampe 22 (L) aktiviert und kurz darauf erfolgt der Start (Z "2").

In Fig. 3 ist das Ablaufschema für einen normalen "Kalt-Start" gezeigt: Dabei wird mit einschaltender Zündung (Z "1") durch das Steuergerät 17 über das Relais 14 ein Heizvorgang des Ansaugluftvorwärmers 1 (H) aktiviert und gleichzeitig die Lampe 22 (L) als Vorglühleuchte geschaltet. Dabei steigt die dem Ansaugluftvorwärmer zugeführte Wärmeenergie Q während der Heizzeit 24 stetig an solange bis der Ansaugluftvorwärmer 1 (H) vom Steuergerät 17 abgeschaltet wird. Die Brennkraftmaschine ist nun für einen Start bereit und der Ansaugluftvorwärmer (1 (H)) kühlt in der anschließenden kurzen Abkühlzeit 25 etwas ab, bis am Punkt 26 der Start (Z "2") der Brennkraftmaschine erfolgt, worauf bei laufender Maschine im Zeitabschnitt 27 weiter eine schnelle Abkühlung erfolgt.

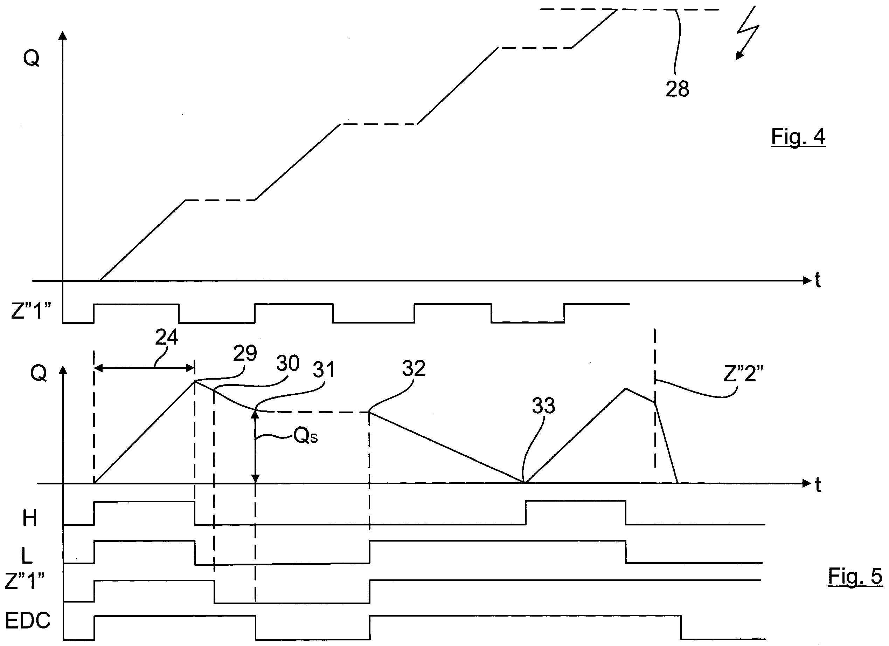

In Fig. 4 ist der Anstieg der Wärmeenergie Q im Ansaugluftvorwärmer 1 (H) gezeigt, wenn (versehentlich oder spielerisch) die Zündung wiederholt AN-AUS (Z "1" - Z "0") geschaltet wird. Dabei ist schematisch die stufenförmige Erhöhung der Wärmenergie Q bis zu einer kritischen Wärmeenergie 28 gezeigt, bei der eine thermische Schädigung der Brennkraftmaschine eintreten kann, wobei insbesondere beim folgenden Start Metallteile einer thermische zerstörten Heizlamelle 5 angesaugt werden können gegebenenfalls mit einem nachfolgenden Totalschaden der Brennkraftmaschine.

Um dies zu verhindern erfolgt die in Fig. 5 angegebene Steuerung: Auch hier erfolgt mit dem Einschalten der Zündung (Z "1") die Heizung des Ansaugluftvorwärmers (H) in Verbindung mit der Einschaltung der Lampe 22 (L) bis zum Zeitpunkt 29 mit einem entsprechenden Anstieg der Wärmeenergie Q. Am Zeitpunkt 30 wird nun willkürlich vom Fahrer die Zündung abgeschalten, ohne jedoch den Motor zu starten. Nach Abschaltung der Zündung am Zeitpunkt 30 bleibt das Steuergerät 17 (ECU) in einer Nachlaufzeit bis zum Zeitpunkt 31 weiter aktiviert und setzt sich dort, insbesondere auch einen internen Zeitzähler für den Start einer neuen Heizperiode zurück. Während der Zeit vom Zeitpunkt 29. bis 31 wird die Abkühlung analog zur verstrichenen Abkühlzeit erfasst und die verbleibende Wärmeenergie Qₛ (oder die zugeordnete Temperatur) zum Zeitpunkt 31 in einem nichtflüchtigen Speicher gespeichert.

Anschließend folgt vom Zeitpunkt 31 bis zum Zeitpunkt 32 eine vom deaktivierten Steuergerät 17 (ECU) nicht erfasste Zwischenzeit, nach der der Fahrer die Zündung wieder einschaltet (Z "1"), wobei auch das Steuergerät 17 (ECU) und die Lampe 22 (L) aktiviert werden. Dabei wartet das Steuergerät 17 (ECU) bis zum Zeitpunkt 33 eine Vorschaltzeit ab, in der Unabhängigkeit von der Länge der nicht erfassten Zwischenzeit zwischen den Zeitpunkten 31 und 32 in jedem Fall sicher eine Abkühlung auf das Null-Niveau von Q erfolgt ist. Erst jetzt schaltet das Steuergerät 17 (ECU) am Zeitpunkt 33 die Heizung des Ansaugluftvorwärmers 1 (H) ein, worauf dann der normale "Kalt-Start" durchgeführt wird, wie er in Fig. 3 dargestellt ist.

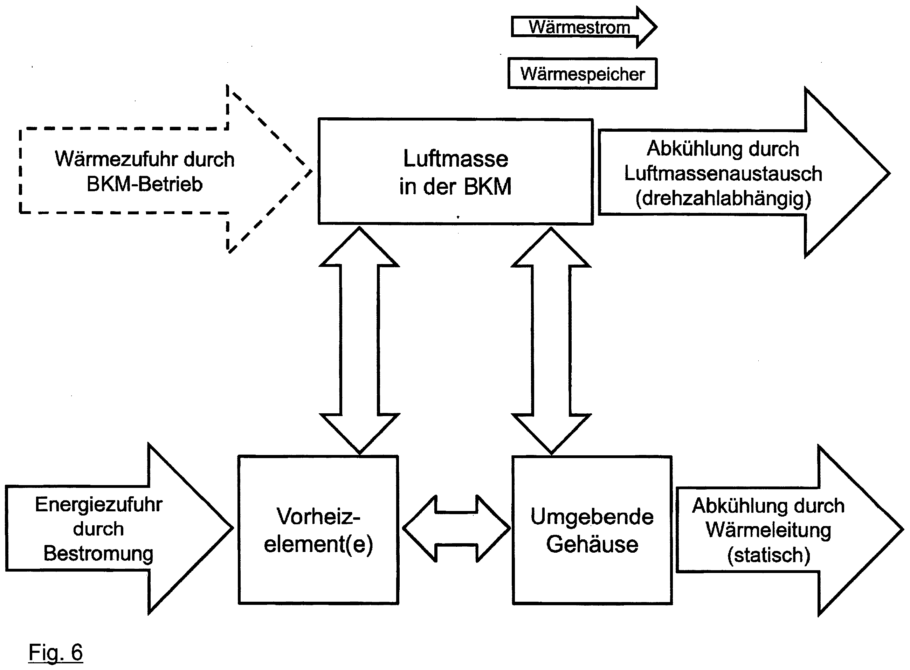

In Fig. 6 ist schematisch in einem Blockdiagramm der Verlauf der Wärmeströme, insbesondere auch die drehzahlabhängige Abkühlung durch den Luftmassenaustausch dargestellt. In Fig. 6 sind die Wärmeströme als Pfeile und die Wärmespeicher als Rechtecke dargestellt.

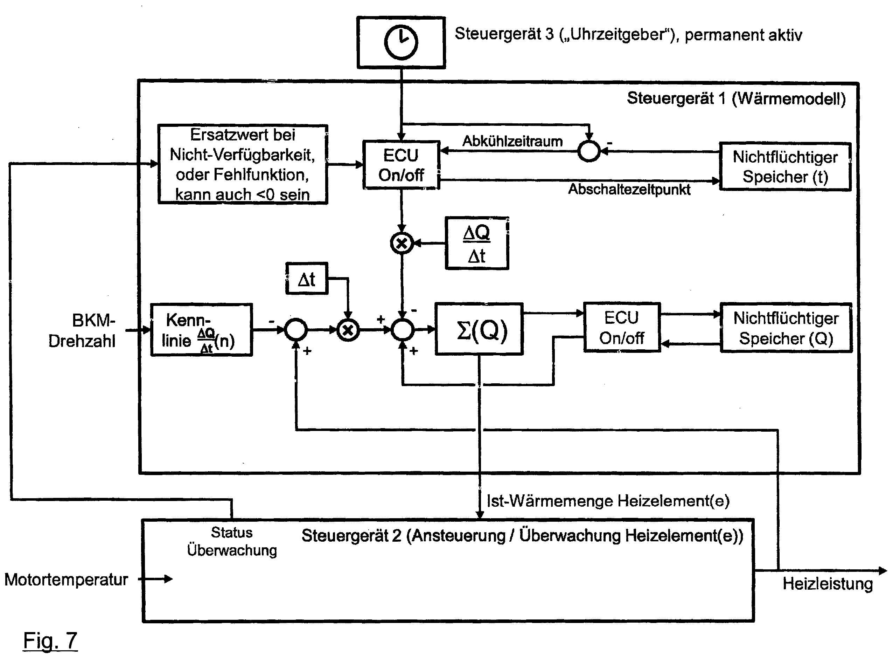

In Fig. 7 ist eine Steuerung für das Wärmemodell dargestellt, welche aus drei Steuergeräten besteht. In Steuergerät 1 sind die Integrator und Speicherfunktionen integriert. Mit dem Steuergerät 2 wird die Ansteuerung/Überwachung der Heizelemente durchgeführt. Das Steuergerät 1 und das Steuergerät 2 werden zweckmäßig aus Gründen der Energieersparnis zusammen mit der Brennkraftmaschine abgeschaltet. Dagegen soll das Steuergerät 3 als "Uhrzeitgeber" permanent aktiv sein, um im Wärmemodell Abschaltzeiten der beiden anderen Steuergeräte 1 und 2 bei einer erneuten Initialisierung berücksichtigen zu können. Die "Uhrzeit" des Steuergeräts 3 kann zweckmäßig von einer ohnehin in Fahrzeug laufenden Uhr abgeleitet werden, kann aber auch jeden beliebigen Bezug beispielsweise als Zeitabschnitt aufweisen.

Zudem ist in Fig. 7 mit Q die Wärmemenge, mit t die Zeit, mit BKM die Brennkraftmaschine und mit ECU eine zentrale elektronische Steuereinheit bezeichnet.

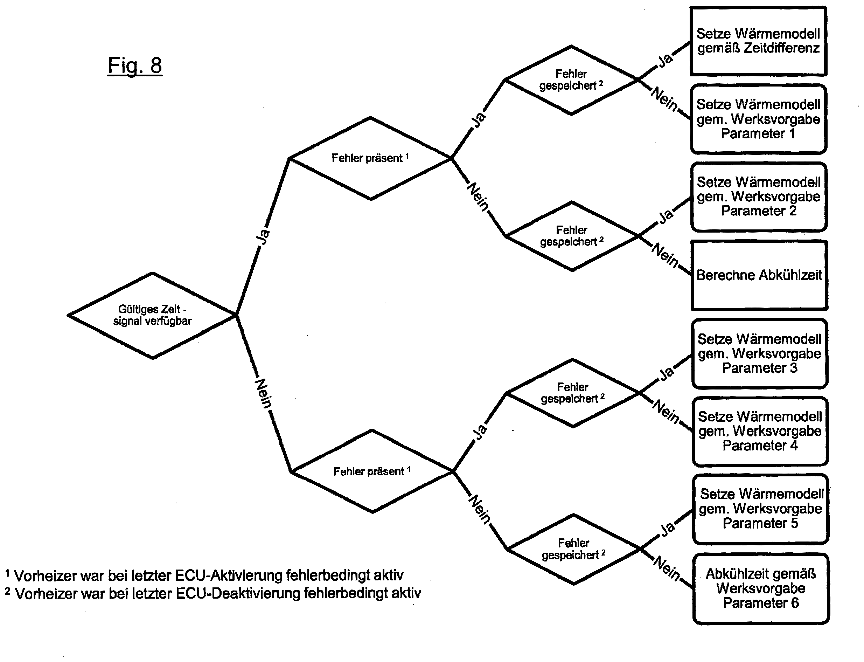

Weiter ist in Fig. 8 ein Entscheidungsbaum für den Umgang mit einer anliegenden/gespeicherten Fehlfunktion abhängig vom verfügbaren Zeitsignal bei einer ECU-Aktivierung dargestellt.

## Patentansprüche

1. Steuerung eines elektrischen Ansaugluftvorwärmers einer Brennkraftmaschine, **dadurch gekennzeichnet,**
**dass** die Wärmeenergie (Q) am Ansaugluftvorwärmer (1) für Maßnahmen gegen eine Überhitzung bilanziert wird, dergestalt,
**dass** die Heizenergie indirekt durch eine Messung der Heizzeit (24) erfasst wird, wobei der gemessenen Heizzeit (24) eine Heiztemperatur entspricht und die Zuordnung gemessene Heizzeit (24) zu Heizenergie und zu Heiztemperatur entsprechend einer ermittelten Heiz-Kennkurve oder einem Heiz-Kennfeld erfolgt,
**dass** die während einer anschließenden Abkühlzeit an die Umgebung abgegebene Kühlenergie indirekt durch Messung der Abkühlzeit (29 bis 30) erfasst wird, wobei die Zuordnung Abkühlzeit zu Kühlenergie und zu Kühltemperatur entsprechend einer ermittelten Kühl-Kennkurve oder einem Kühl-Kennfeld erfolgt, und die Kühlenergie von der Heizenergie abgezogen wird, und
**dass** die verbleibende Differenz entsprechend einer Restheizenergie (Qₛ) als Kriterium verwendet wird, ob nach der gemessenen Abkühlzeit sofort ein erneuter Heizperiodenstart ohne Überhitzung zulässig ist oder eine weitere Abkühlzeit als Vorschaltzeit (32 bis 33) für eine weitere Abkühlung auf einem unkritischem Wert für einen neuen Heizstart ermittelt wird oder ob die anstehende Vorheizperiode aufgrund noch vorhandener Restwärme verkürzt werden kann.

2. Steuerung nach Anspruch 1, **dadurch gekennzeichnet, dass** durch einen manuell eingeschalteten Zündschalter (15) ein Einschaltmodus eines Steuergeräts (17) aktiviert wird, womit die Heizfunktion des Ansaugluftvorwärmers (1) für wenigstens einen Heizzyklus mit einer bestimmten Heizzeit (24) eingeschaltet wird,
dass nach Ablauf der Heizzeit (24) oder Ausschalten des Zündschalters (15) die Heizfunktion für den Ansaugluftvorwärmer (1) vom Steuergerät (17) abgeschaltet und nach einer Nachlaufzeit (30, 31) des Steuergeräts (17) der Einschaltmodus zurückgesetzt und deaktiviert wird, wobei im normalen Betrieb nach der Heizzeit (24) innerhalb der Nachlaufzeit ein Start der Brennkraftmaschine erfolgt,
dass ein Zeitzähler im Steuergerät (17) die Heizzeit (24) vorgibt und erfasst und dieser eine an Heizelemente (5) des Ansaugluftvorwärmers (1) abgegebene aufsummierte elektrische Heizenergie (Q) zugeordnet wird und diese jeweils aufsummierte Heizenergie wiederum jeweils eine Heiztemperatur und damit eine aktuelle Heiztemperatur beim Ablauf der Heizzeit (24) an den Heizelementen (5) zugeordnet wird,
dass der Zeitzähler anschließend an die Heizzeit (24) die Zeit einschließlich der Nachlaufzeit nach Abschaltung des Zündschalters (15) als Abkühlzeit erfasst und dieser eine von an den Heizelementen (ausgehend von der aufsummierten Heizenergie) an die Umgebung abgegebene Kühlenergie zugeordnet wird und dieser von der Heizenergie im Steuergerät (17) subtrahierten Kühlenergie als Restheizenergie wiederum eine Abkühltemperatur und damit eine aktuelle Abkühltemperatur beim Ablauf der Nachlaufzeit (Zeitpunkt 31) zugeordnet wird,
dass der Differenzwert als Abkühlwert (Qs) entsprechend dieser Abkühltemperatur in einem nichtflüchtigen Speicher beim Ablauf der Nachlaufzeit (ohne Start der Brennkraftmaschine) gespeichert und der Zeitzähler für einen Neustart zurückgesetzt wird,
dass bei einem erneuten Einschalten des Zündschalters (15) und damit einer Aktivierung des Steuergeräts (17) der beim Ablauf der vorherigen Nachlaufzeit gespeicherte Abkühlwert (Qs) ausgelesen und als Start für eine vom Zeitgeber vorgegebene Vorschaltzeit als eine fiktive Abkühlzeit (32 bis 33) verwendet wird, die sich aus der möglichen abgebbaren Kühlenergie bis zum Erreichen einer für den Ansaugluftvorwärmer (1) unkritischen Starttemperatur ergibt, und
dass nach Ablauf dieser Vorschaltzeit (32 bis 33) der Startmodus für einen Heizvorgang am Ansaugluftvorwärmer (1) aktiviert wird.

3. Steuerung nach Anspruch 1 oder 2, **dadurch gekennzeichnet, dass** bei der Zuordnung Heizzeit-Heizenergie - Heiztemperatur und/oder bei der Zuordnung Abkühlzeit - Kühlenergie - Kühltemperatur eine Anpassung an Systemparameter, insbesondere an eine gemessene Umgebungstemperatur und/oder an einen Ansaugluftmassenstrom erfolgt.

4. Steuerung nach einem der Ansprüche 1 bis 3, **dadurch gekennzeichnet, dass** für einen neuen Heizzyklus die Heizzeit (24) unter Berücksichtigung einer ermittelten Restheizenergie entsprechend verkürzt wird.

5. Steuerung nach einem der Ansprüche 1 bis 4, **dadurch gekennzeichnet, dass** mit einem Motor-Temperatursensor ein Temperatur-Schwellwert vorgegeben wird, über dem ein "Warm-Start" der Brennkraftmaschine ohne Heizung des Ansaugluftvorwärmer (1) und ohne Aktivierung einer Vorglühleuchte durchführbar ist, und
dass unter dem Temperatur-Schwellwert bei Einschaltung der Zündung der Heizzyklus für eine Heizung des Ansaugluftvorwärmers (1) zusammen mit einer Aktivierung der Vorglühleuchte (22) gestartet wird.

6. Steuerung nach Anspruch 5, **dadurch gekennzeichnet, dass** die Vorglühleuchte (22) bereits in der dem Heizzyklus vorgeschalteten Vorschaltzeit (32 bis 33) aktiviert wird.

7. Steuerung nach einem der Ansprüche 1 bis 6, **dadurch gekennzeichnet, dass** mittels wenigstens eines Temperatursensors unmittelbar eine Temperatur-Überwachung auf Überhitzung des Ansaugluftvorwärmer (1) durchgeführt wird.

8. Steuerung nach einem der Ansprüche 1 bis 7, **dadurch gekennzeichnet, dass** Sensorwerte, welche sich typischerweise nur vergleichsweise langsam ändern, insbesondere ein Kühlwassertemperatur-Sensorwert ebenfalls erfasst und in einem nichtflüchtigen Speicher beim Ablauf der Nachlaufzeit abgelegt werden,
dass bei einer Änderung eines oder mehrerer dieser Sensorwerte in signifikanter Größenordnung, zum Beispiel bei einem Absinken der Kühlwassertemperatur um mehr als 30°K durch einen Algorithmus auf eine ausreichend lange Abkühlzeit geschlossen und der gespeicherte Wärmewert zurückgesetzt wird, so dass ein Heizvorgang sofort wieder aktivierbar ist.

9. Steuerung nach einem der Ansprüche 1 bis 8, **dadurch gekennzeichnet, dass** im Wärmemodell für die Bilanzierung der Heizenergie und der Kühlenergie in einem Integrator die innerhalb der Brennkraftmaschine stattfindende Konvektion durch den Ansaugluftmassenstrom abhängig von der Motordrehzahl berücksichtigt wird, indem der Integrator gemäß einer Kennlinie dQ/dt = F(Nₘₒₜ) dekrementiert wird.

10. Steuerung nach einem der Ansprüche 1 bis 9, **dadurch gekennzeichnet, dass** die Inkrementierungsgeschwindigkeit des im Wärmemodell verwendeten Integrators an die physikalische Leistung der Heizelemente angepasst wird, welche abhängig von der Ansteuerung und/oder der zur Verfügung stehenden Batteriespannung sein kann.

11. Steuerung nach einem der Ansprüche 1 bis 10, **dadurch gekennzeichnet, dass** der numerische Stand des im Wärmemodell verwendeten Integrators beim Abschalten des Steuergeräts in einem nichtflüchtigen Speicher als aktuelle Wärmemenge in einem Wärmekonto abgelegt wird und bei einer erneuten Aktivierung des Steuergeräts der Integrator mit dem gespeicherten Wert initialisiert wird, so dass die vor der Abschaltung des Steuergeräts eingebrachte Wärmemenge im Wärmemodell berücksichtigt wird.

12. Steuerung nach einem der Ansprüche 1 bis 11, **dadurch gekennzeichnet, dass** die aktuelle erfasste Zeit bei einem Stopp der Berechnung im Wärmemodell bei einer Deaktivierung des Steuergeräts in einen nichtflüchtigen Speicher geschrieben wird und nach einer erneuten Aktivierung zur Verfügung steht, so dass die bei einem inaktiven Steuergerät verstrichener Zeit als Abkühlzeit mit stehender Brennkraftmaschine im Wärmemodell berechnet und berücksichtigt wird und/oder
dass die Funktion des Wärmemodells auf mindestens zwei kooperierende Steuergeräte verteilt ist, von denen nur eines bei abgestellter Brennkraftmaschine in Betrieb ist welches bei Bedarf den anderen Steuergeräten ein aktuelles Zeitsignal liefert.

13. Steuerung nach einem der Ansprüche 1 bis 12, **dadurch gekennzeichnet, dass** bei einer fehlerhaften und andauernden Aktivierung des Vorheizsystems mit dem Wärmemodell errechnet wird, ob ein vorgegebener Schwellwert, der bereits geschmolzenen Vorheizelementen zugeordnet ist, überschritten ist und bei überschrittenem Schwellwert ein Start der Brennkraftmaschine als Motorschutz unterbunden oder erschwert wird.

14. Steuerung nach einem der Ansprüche 1 bis 13, **dadurch gekennzeichnet, dass** nach Aktivierung des Steuergeräts eine ausreichende Verzögerungszeit vorgehalten wird, um eine Zeitinformation aus einem Datenübertragungssystem mit begrenzter Kapazität zu empfangen und/oder
dass in einem Fehlerfall bei einer nicht nachvollziehbaren Heizdauer eine Annahme über eine Heizdauer gemäß einer Werksvorgabe erfolgt, welche zu einer entsprechenden Fehlerreaktion führt.

15. Brennkraftmaschinenbetriebenes Kraftfahrzeug, insbesondere Nutzfahrzeug, mit einer Steuerung nacheinem der vorhergehenden Ansprüche.

## Claims

1. Control arrangement of an electric intake air preheater of an internal combustion engine, **characterized**
**in that** the heat energy (Q) at the intake air preheater (1) is balanced for measures against overheating, in such a way
that the heating energy is detected indirectly by measurement of the heating time (24), wherein the measured heating time (24) corresponds to a heating temperature, and the assignment of measured heating time (24) to heating energy and to heating temperature takes place corresponding to a determined heating characteristic curve or a heating characteristic map,
that the cooling energy dissipated to the environment during a subsequent cooling time is detected indirectly by measurement of the cooling time (29 to 30), wherein the assignment of cooling time to cooling energy and to cooling temperature takes place corresponding to a determined cooling characteristic curve or a cooling characteristic map, and the cooling energy is subtracted from the heating energy, and
that the remaining difference, corresponding to a residual heating energy (Qₛ), is used as a criterion of whether a new heating period start is admissible immediately after the measured cooling time without overheating or a further cooling time as a prefix time (32 to 33) for further cooling to a non-critical value for a new heating start is determined, or of whether the impending preheating period can be shortened owing to residual heat that is still present.

2. Control arrangement according to Claim 1, **characterized in that**, by means of a manually switched-on ignition switch (15), a switch-on mode of a control unit (17) is activated, whereby the heating function of the intake air preheater (1) is switched on for at least one heating cycle with a predetermined heating time (24),
**in that**, after expiry of the heating time (24) or after the ignition switch (15) is switched off, the heating function for the intake air preheater (1) is switched off by the control unit (17) and, after a follow-on time (30, 31) of the control unit (17), the switch-on mode is reset and deactivated, wherein a start of the internal combustion engine takes place within the follow-on time in the normal mode after the heating time (24),
**in that** a time counter in the control unit (17) predefines and detects the heating time (24), and assigns to said heating time an accumulated electric heating energy (Q) output at heating elements (5) of the intake air preheater (1), and said in each case accumulated heating energy is in turn assigned in each case one heating temperature and thus a present heating temperature upon expiry of the heating time (24) at the heating elements (5),
**in that**, subsequent to the heating time (24), the time counter detects the time including the follow-on time after switch-off of the ignition switch (15) as a cooling time, and said cooling time is assigned a cooling energy dissipated to the environment at the heating elements (taking the accumulated heating energy as a starting point), and said cooling energy subtracted in the control unit (17) from the heating energy is, as residual heating energy, assigned in turn a cooling temperature and thus a present cooling temperature upon expiry of the follow-on time (time point 31),
**in that** the difference value is stored, as a cooling value (Qₛ) corresponding to said cooling temperature, in a non-volatile memory upon expiry of the follow-on time (without starting of the internal combustion engine) and the time counter is reset for a new start,
**in that**, in the event of a new switch-on of the ignition switch (15) and thus an activation of the control unit (17), the cooling value (Qₛ) stored upon expiry of the preceding follow-on time is read out and used as a start for a prefix time, predefined by the timer, as a fictitious cooling time (32 to 33) yielded by the possible cooling energy that can be output until a start temperature that is non-critical for the intake air preheater (1) is reached, and
**in that**, after expiry of said prefix time (32 to 33), the start mode for a heating process at the intake air preheater (1) is activated.

3. Control arrangement according to Claim 1 or 2, **characterized in that**, in the assignment of heating time - heating energy - heating temperature and/or in the assignment of cooling time - cooling energy - cooling temperature, an adaptation to system parameters, in particular to a measured ambient temperature and/or to an intake air mass flow, is performed.

4. Control arrangement according to one of Claims 1 to 3, **characterized in that**, for a new heating cycle, the heating time (24) is correspondingly shortened taking into consideration a determined residual heating energy.

5. Control arrangement according to one of Claims 1 to 4, **characterized in that**, by means of an engine temperature sensor, a temperature threshold is predefined above which a "warm start" of the internal combustion engine can be performed without heating of the intake air preheater (1) and without activation of a glow lamp, and
**in that**, below the temperature threshold, in the event of a switch-on of the ignition, the heating cycle for heating of the intake air preheater (1) is started together with an activation of the glow lamp (22).

6. Control arrangement according to Claim 5, **characterized in that** the glow lamp (22) is activated already in the prefix time (32 to 33) that precedes the heating cycle.

7. Control arrangement according to one of Claims 1 to 6, **characterized in that** temperature monitoring with regard to overheating of the intake air preheater (1) is performed directly by means of at least one temperature sensor.

8. Control arrangement according to one of Claims 1 to 7, **characterized in that** sensor values, which typically change only comparatively slowly, in particular a cooling water temperature sensor value, are likewise detected and stored in a non-volatile memory upon expiry of the follow-on time,
**in that**, in the event of a change of one or more of said sensor values by a significant order of magnitude, for example in the event of a decrease of the cooling water temperature by more than 30°K, by means of an algorithm, an adequately long cooling time is inferred and the stored heat value is reset such that a heating process can be immediately activated again.

9. Control arrangement according to one of Claims 1 to 8, **characterized in that**, in the heat model for the balancing of the heating energy and the cooling energy, in an integrator, the convection taking place within the internal combustion engine as a result of the intake air mass flow is taken into consideration as a function of the engine rotational speed by virtue of the integrator being decremented in accordance with a characteristic curve dQ/dt = F(Nₘₒₜ).

10. Control arrangement according to one of Claims 1 to 9, **characterized in that** the incrementation rate of the integrator used in the heat model is adapted to the physical power of the heating elements, which may be dependent on the actuation and/or on the available battery voltage.

11. Control arrangement according to one of Claims 1 to 10, **characterized in that**, upon the switch-off of the control unit, the numerical value of the integrator used in the heat model is stored in a non-volatile memory as a present amount of heat in a heat account, and upon a new activation of the control unit, the integrator is initialized with the stored value, such that the amount of heat introduced before the switch-off of the control unit is taken into consideration in the heat model.

12. Control arrangement according to one of Claims 1 to 11, **characterized in that** the present time detected upon a stoppage of the calculation in the heat model in the event of a deactivation of the control unit is written into a non-volatile memory and made available after a new activation, such that the time that elapses while the control unit is inactive, as a cooling time while the internal combustion engine is stationary, is calculated and taken into consideration in the heat model, and/or
**in that** the function of the heat model is distributed across at least two cooperating control units, of which only one control unit is in operation while the internal combustion engine is in the shut-down state, said one control unit providing a present time signal to the other control units as required.

13. Control arrangement according to one of Claims 1 to 12, **characterized in that**, in the event of an erroneous and ongoing activation of the preheating system, it is calculated by means of the heat model whether a predefined threshold assigned to preheating elements that have already melted is exceeded, and in the event of the threshold being exceeded, a start of the internal combustion engine is prevented or hindered as an engine protection measure.

14. Control arrangement according to one of Claims 1 to 13, **characterized in that**, after activation of the control unit, an adequate delay time is allowed to elapse in order to receive time information from a data transmission system with restricted capacity, and/or
**in that**, in the event of a fault whereby a heating duration is irreproducible, an assumption regarding a heating duration is made in accordance with a factory preset, which leads to a corresponding fault reaction.

15. Internal-combustion-engine-powered motor vehicle, in particular utility vehicle, having a control arrangement according to one of the preceding claims.

## Revendications

1. Commande d'un préchauffeur électrique d'air d'aspiration d'un moteur à combustion interne, **caractérisée en ce**
**qu'**un bilan de l'énergie thermique (Q) au niveau du préchauffeur d'air d'aspiration (1) est établi en vue de prendre des mesures contre une surchauffe, de sorte
**que** l'énergie de chauffage est détectée indirectement par une mesure du temps de chauffage (24), le temps de chauffage (24) mesuré correspondant à une température de chauffage et l'association du temps de chauffage (24) mesuré à l'énergie de chauffage et à la température de chauffage s'effectuant conformément à une courbe caractéristique de chauffage identifiée ou un diagramme caractéristique de chauffage,
**que** l'énergie de refroidissement délivrée à l'environnement durant un temps de refroidissement qui suit est détectée indirectement par mesure du temps de refroidissement (29 à 30), l'association du temps de refroidissement à l'énergie de refroidissement et à la température de refroidissement s'effectuant conformément à une courbe caractéristique de refroidissement identifiée ou un diagramme caractéristique de refroidissement, et l'énergie de refroidissement étant soustraite de l'énergie de chauffage, et
**que** l'énergie de chauffage résiduelle (Q_{S}), qui correspond à la différence restante, est utilisée comme critère pour décider si un démarrage d'une nouvelle période de chauffage sans surchauffe est permise immédiatement après le temps de refroidissement mesuré ou si un temps de refroidissement supplémentaire est identifié en tant que temps amont (32 à 33) pour un refroidissement supplémentaire à une valeur non critique pour un nouveau démarrage du chauffage ou si la période de préchauffage en attente peut être raccourcie du fait de la chaleur résiduelle encore présente.

2. Commande selon la revendication 1, **caractérisée en ce qu'**un mode de mise en service d'un contrôleur (17) est activé par un commutateur d'allumage (15) mis en circuit manuellement, contrôleur par lequel la fonction de chauffage du préchauffeur d'air d'aspiration (1) est mise en service pendant au moins un cycle de chauffage avec un temps de chauffage (24) déterminé,
qu'après écoulement du temps de chauffage (24) ou mise hors circuit du commutateur d'allumage (15), la fonction de chauffage pour le préchauffeur d'air d'aspiration (1) est mise hors service par le contrôleur (17) et après un temps d'inertie de fonctionnement (30, 31) du contrôleur (17), le mode de mise en service est réinitialisé et désactivé, en fonctionnement normal, un démarrage du moteur à combustion interne ayant lieu après le temps de chauffage (24) au sein du temps d'inertie de fonctionnement,
qu'un compteur de temps dans le contrôleur (17) prédéfinit et acquiert le temps de chauffage (24) et celui-ci est associé à une énergie de chauffage (Q) électrique totalisée délivrée à des éléments chauffants (5) du préchauffeur d'air d'aspiration (1) et à cette énergie de chauffage respectivement totalisée est à son tour associée respectivement une température de chauffage et ainsi une température de chauffage actuelle lors de l'écoulement du temps de chauffage (24) au niveau des éléments chauffants (5),
que le compteur de temps acquiert, à la suite du temps de chauffage (24), le temps incluant le temps d'inertie de fonctionnement après la mise hors circuit du commutateur d'allumage (15) en tant que temps de refroidissement, et celui-ci est associé à une énergie de refroidissement délivrée à l'environnement au niveau des éléments chauffants (en partant de l'énergie de chauffage totalisée), et cette énergie de refroidissement soustraite de l'énergie de chauffage dans le contrôleur (17) est à son tour associée à une température de refroidissement et ainsi à une température de refroidissement actuelle lors de l'écoulement du temps d'inertie de fonctionnement (instant 31),
que la valeur de la différence est mémorisée dans une mémoire non volatile lors de l'écoulement du temps d'inertie de fonctionnement (sans démarrage du moteur à combustion interne) en tant que valeur de refroidissement (Q_{S}) conformément à cette température de refroidissement et le compteur de temps est remis à zéro pour un redémarrage,
que lors d'une nouvelle mise en circuit du commutateur d'allumage (15) et ainsi une activation du contrôleur (17), la valeur de refroidissement (Q_{S}) mémorisée lors de l'écoulement du temps d'inertie de fonctionnement précédent est lue et utilisée comme départ pour un temps amont prédéfini par le générateur de temps en tant que temps de refroidissement fictif (32 à 33) qui résulte de l'énergie de refroidissement possible pouvant être délivrée jusqu'à atteindre une température de départ non critique pour le préchauffeur d'air d'aspiration (1), et
qu'après écoulement de ce temps amont (32 à 33), le mode de démarrage pour une opération de chauffage est activé sur le préchauffeur d'air d'aspiration (1).

3. Commande selon la revendication 1 ou 2, **caractérisée en ce que** lors de l'association temps de chauffage - énergie de chauffage - température de chauffage et/ou lors de l'association temps de refroidissement - énergie de refroidissement - température de refroidissement, une adaptation aux paramètres du système, notamment à une température environnante mesurée et/ou à un débit massique d'air aspiré est effectuée.

4. Commande selon l'une des revendications 1 à 3, **caractérisée en ce que** pour un nouveau cycle de chauffage, le temps de chauffage (24) est raccourci en conséquence en tenant compte d'une énergie de chauffage résiduelle déterminée.

5. Commande selon l'une des revendications 1 à 4, **caractérisée en ce qu'**avec un capteur de température de moteur est prédéfinie une valeur de seuil de température, par le biais de laquelle un « démarrage à chaud » du moteur à combustion interne peut être réalisé sans chauffage du préchauffeur d'air d'aspiration (1) et sans activation d'une ampoule de préchauffage, et qu'au-dessous de la valeur de seuil de température, lors de la mise en circuit de l'allumage, le cycle de chauffage est démarré pour un chauffage du préchauffeur d'air d'aspiration (1) conjointement avec une activation de l'ampoule de préchauffage (22).

6. Commande selon la revendication 5, **caractérisée en ce que** l'ampoule de préchauffage (22) est déjà activée dans le temps amont (32 à 33) qui précède le cycle de chauffage.

7. Commande selon l'une des revendications 1 à 6, **caractérisée en ce qu'**une surveillance de la température en vue de détecter une surchauffe du préchauffeur d'air d'aspiration (1) est effectuée directement au moyen d'au moins un capteur de température.

8. Commande selon l'une des revendications 1 à 7, **caractérisée en ce que** des valeurs de capteur qui ne varient généralement que relativement lentement, notamment une valeur de capteur de température d'eau de refroidissement, sont également acquises et stockées dans une mémoire non volatile lors de l'écoulement du temps d'inertie de fonctionnement,
que dans le cas d'une modification d'une ou plusieurs de ces valeurs de capteur d'un ordre de grandeur important, par exemple dans le cas d'une chute de la température de l'eau de refroidissement de plus de 30°K, un algorithme amène à déduire un temps de refroidissement suffisamment long et la valeur thermique mémorisée est réinitialisée de sorte qu'une opération de chauffage peut immédiatement être réactivée.

9. Commande selon l'une des revendications 1 à 8, **caractérisée en ce que** dans le modèle thermique pour l'établissement du bilan de l'énergie de chauffage et de l'énergie de refroidissement, la convection qui est produite à l'intérieur du moteur à combustion interne par le débit massique d'air aspiré en fonction de la vitesse de rotation du moteur est prise en compte dans un intégrateur en décrémentant l'intégrateur conformément à une courbe caractéristique dQ/dt = F(Nₘₒₜ).

10. Commande selon l'une des revendications 1 à 9, **caractérisée en ce que** la vitesse d'incrémentation de l'intégrateur utilisé dans le modèle thermique est adaptée à la puissance physique des éléments chauffants, laquelle peut être dépendante de l'attaque et/ou de la tension de batterie disponible.

11. Commande selon l'une des revendications 1 à 10, **caractérisée en ce que** l'état numérique de l'intégrateur utilisé dans le modèle thermique est stocké en tant que quantité de chaleur actuelle dans un compte de chaleur dans une mémoire non volatile lors de la mise hors circuit du contrôleur et lors d'une nouvelle activation du contrôleur, l'intégrateur est initialisé avec la valeur mémorisée de sorte que la quantité de chaleur introduite avant la mise hors circuit du contrôleur est prise en compte dans le modèle thermique.

12. Commande selon l'une des revendications 1 à 11, **caractérisée en ce que** le temps actuellement acquis lors d'un arrêt du calcul dans le modèle thermique est écrit dans une mémoire non volatile lors d'une désactivation du contrôleur et il est disponible après une nouvelle activation, de sorte que le temps écoulé lorsque le contrôleur est inactif est calculé et pris en compte dans le modèle thermique en tant que temps de refroidissement avec le moteur à combustion interne à l'arrêt et/ou
que la fonction du modèle thermique est distribuée sur au moins deux contrôleurs coopérants, parmi lesquels un seul est en service lorsque le moteur à combustion interne est à l'arrêt et délivre en cas de besoin un signal de temps actuel aux autres contrôleurs.

13. Commande selon l'une des revendications 1 à 12, **caractérisée en ce que** dans le cas d'une activation incorrecte ou continuelle du système de préchauffage, un calcul est effectué avec le modèle thermique en vue de déterminer si une valeur de seuil prédéfinie, qui est associée aux éléments de préchauffage déjà fondus, est dépassée et, en cas de dépassement de la valeur de seuil, un démarrage du moteur à combustion interne est inhibé ou rendu difficile en tant que protection du moteur.

14. Commande selon l'une des revendications 1 à 13, **caractérisée en ce qu'**après l'activation du contrôleur, un temps de retard suffisant est réservé pour recevoir une information de temps de la part d'un système de transmission de données ayant une capacité limitée et/ou
que dans le cas d'un défaut, lorsqu'une durée de chauffage n'est pas vérifiable, une hypothèse est émise pour une durée de chauffage selon une valeur par défaut d'usine, laquelle donne lieu à une réaction de défaut correspondante.

15. Véhicule automobile propulsé par un moteur à combustion interne, notamment véhicule utilitaire, comprenant une commande selon l'une des revendications précédentes.
